# EUROPÄISCHE PATENTSCHRIFT

(11) **EP 0 848 785 B1**
(45) Veröffentlichungstag und Bekanntmachung des Hinweises auf die Patenterteilung: **19.05.1999**
(21) Anmeldenummer: 96930982.2
(22) Anmeldetag: 29.08.1996
(51) Int. Cl.: F01N 3/20

(54) **ELEKTRISCHE ISOLIERENDE DURCHFÜHRUNG MIT EINER ELEKTROKORROSIONSSCHUTZEINRICHTUNG**
ELECTRICAL INSULATION LEAD-THROUGH WITH A DEVICE PROTECTING AGAINST THE ELECTROCORROSION
TRAVERSEE ELECTRIQUEMENT ISOLANTE AVEC DISPOSITIF DE PROTECTION CONTRE L'ELECTROCORROSION

(30) Priorität: 07.09.1995 DE 19533088
(43) Veröffentlichungstag der Anmeldung: 24.06.1998
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE); BERGAU, Norbert, D-53804 Much (DE)
(74) Vertreter: Kahlhöfer, Hermann, Dipl.-Phys.
(86) Internationale Anmeldenummer: EP9603809
(87) Internationale Veröffentlichungsnummer: WO9709519

(56) Entgegenhaltungen:
- WO-A-92/02714
- WO-A-93/05284
- DE-A- 2 915 163
- ES-A- 2 073 969
- US-A- 3 838 384
- PATENT ABSTRACTS OF JAPAN vol. 010, no. 292 (C-376), 3.Oktober 1986 & JP 61 110786 A (SANYO ELECTRIC CO LTD;OTHERS: 01), 29.Mai 1986,

## Beschreibung

Die vorliegende Erfindung betrifft eine elektrisch isolierende Durchführung wenigstens eines elektrischen Leiters durch einen metallischen Mantel eines Abgassystems einer Verbrennungskraftmaschine, insbesondere eines elektrisch beheizbaren katalytischen Konverters.

Luftverschmutzung bedingt durch Autoabgase steht im Mittelpunkt des umweltpolitischen Interesses. Es besteht die Absicht der europäischen Kommission, bis September 1995 den Entwurf für eine weitere Stufe der Abgasgesetzgebung vorzulegen, die dann ab dem Jahre 2000 für Neuwagen gilt. Durch diese Vorschriften soll der Ausstoß an Schadstoffen aus Verbrennungsmotoren reduziert werden. Mit den steigenden Anforderungen an einer Verringerung der Schadstoffe in Abgasen aus Kraftfahrzeugen werden zunehmend komplexere Abgasreinigungssysteme für Verbrennungskraftmaschinen eingesetzt. Insbesondere zur Verringerung des Schadstoffausstosses während der Kaltstartphase eines Verbrennungsmotors werden neben geregelten Drei-Wege-Katalysatoren elektrisch beheizbare katalytische Konverter eingesetzt. Eine solche Anordnung ist z. B. durch die WO 92/02714 bekannt. Problematisch bei solchen elektrisch beheizbaren katalytischen Konvertern ist die elektrische Durchführung elektrischer Leiter von einer Spannungsquelle zu dem elektrisch beheizbaren katalytischen Konverter. Ein Lösungsvorschlag für eine elektrische Durchführung ist durch die WO 94/18442 bekannt.

Durch die EP-A-0 490 222 ist eine elektrisch isolierende Durchführung eines elektrischen Leiters durch einen metallischen Mantel eines Abgassystems einer Verbrennungskraftmaschine, insbesondere eines elektrisch beheizbaren katalytischen Konverters, bekannt. Der Mantel weist im Bereich der Durchführung eine Hülse aus einem metallischen Werkstoff auf. Die Hülse ist mit dem Mantel verbunden. Durch die Hülse erstreckt sich der elektrische Leiter. Der elektrische Leiter ist mit einer Spannungsquelle verbunden.

Es ist festgestellt worden, daß die elektrische Durchführung und/oder elektrische Leiter durch Korrosion zerstört werden können.

Der vorliegenden Erfindung liegt die Aufgabe zugrunde, die gattungsbildende elektrisch isolierende Durchführung so weiter zu entwickeln, daß diese korrosionsbeständiger wird.

Diese Aufgabe wird erfindungsgemäß durch eine elektrisch isolierende Durchführung mit den Merkmalen des Anspruchs 1, 11 oder 19 gelöst. Vorteilhafte Weiterbildungen sind Gegenstand der Unteransprüche.

Die erfindungsgemäße elektrisch isolierende Durchführung wenigstens eines elektrischen Leiters durch einen metallischen Mantel eines Abgassystems einer Verbrennungskraftmaschine, insbesondere eines elektrisch beheizbaren Konverters, wobei der Mantel im Bereich der Durchführung eine Hülse aus einem metallischen Werkstoff aufweist, die mit dem Mantel verbunden ist und durch die sich der Leiter erstreckt, zeichnet sich dadurch aus, daß die Durchführung eine Schutzeinrichtung aufweist, durch die Elektrokorrosion der Durchführung vermieden wird. Die Schutzeinrichtung umfaßt wenigstens eine Opferelektrode, die mit der Hülse elektrisch verbunden ist. Der Erfindung liegt der Gedanke zugrunde, daß die Korrosion der Durchführung im wesentlichen durch die Ausbildung galvanischer Elemente im Bereich der Durchführung bedingt ist. Aufgrund der verschiedenen metallischen Werkstoffe in der Durchführung, wobei einzelne Bauteile auf unterschiedlichen elektrischen Potentialen liegen, entstehen galvanische Elemente, wenn ein Elektrolyt hinzukommt. Bei einem Elektrolyten kann es sich um Wasser, insbesondere Salzwasser handeln. Um der durch die Ausbildung galvanischer Elemente bedingten Elektrokorrosion Einhalt zu gebieten, ist die Durchführung mit einer Schutzeinrichtung versehen.

Die Ausbildung galvanischer Elemente wird zwar nicht verhindert, eine Elektrokorrosion wird jedoch von den Bauteilen der Durchführung auf die Opferelektrode hin verlagert. Hierdurch wird eine Korrosion der Durchführung verringert.

Bevorzugt ist eine Ausführungsform der Schutzeinrichtung, bei der die Opferelektrode auf der Hülse angeordnet ist. Die Opferelektrode ist dabei ringförmig ausgebildet und kraft- und/oder formschlüssig mit der Hülse verbunden. Durch die Verbindung der Opferelektrode mit der Hülse kann die Opferelektrode bei Bedarf ausgetauscht werden. Die Anbringung der Opferelektrode auf der Hülse hat auch den Vorteil, daß die Opferelektrode einer Sichtprüfung unterzogen werden kann, ohne daß umfangreiche Demontagearbeiten notwendig sind. Zur kraftschlüssigen Verbindung der Opferelektrode mit der Hülse wird vorgeschlagen, die Opferelektrode auf die Hülse zu pressen oder warm aufzuschrumpfen.

Gemäß eines weiteren vorteilhaften Gedankens wird vorgeschlagen, die Opferelektrode auf dem Mantel anzuordnen und elektrisch mit der Hülse zu verbinden. Die Verbindung der Opferelektrode mit dem Mantel ist vorzugsweise lösbar ausgebildet. Hierzu wird vorgeschlagen, die Opferelektrode auf einem mit dem Mantel festverbundenen Bolzen anzuordnen. Durch diese Ausbildung wird der Ersatz der Opferelektrode vereinfacht. Ferner wird die Möglichkeit geboten, mehrere Opferelektroden auf dem Mantel anzuordnen, so daß eine räumliche Begrenzung der Opferelektrode, wie dies bei einer Anordnung der Opferelektrode auf der Hülse der Fall sein kann, vermieden wird. Die Verbindung der Opferelektrode mit der Hülse erfolgt vorzugsweise mittels einer Leitung aus einem elektrisch gut leitenden Werkstoff, insbesondere mittels einer Kupferleitung.

Der Leiter der Durchführung wird über eine elektrische Leitung mit einer Spannungsquelle verbunden. Zur Verbindung der elektrischen Leitung mit dem Leiter werden Kontaktkörper verwendet. Es wird vorgeschlagen am Kontaktkörper die Opferelektrode auszubilden. Diese Ausbildung hat den Vorteil, daß der bisherige Herstellungsprozeß eines elektrisch beheizbaren katalytischen Konverters beibehalten werden kann. Um einen sicheren Kontakt zwischen dem Leiter und dem Kontaktkörper herzustellen, wird vorgeschlagen, den Leiter mit dem Kontaktkörper kraft- und/oder formschlüssig verbindbar auszubilden.

Gemäß einem weiteren Vorschlag ist der Kontaktkörper mit einer Schutzschicht versehen, die direkt auf dem Kontaktkörper aufgebracht ist. Die Schutzschicht kann beispielsweise aus Zink bestehen. Sie wirkt anodisch.

Neben den vorstehend beschriebenen Alternativen der Anordnung einer Opferelektrode kann diese auch unmittelbar auf einer elektrischen Leitung, die einesends mit dem Leiter und anderenends mit einer Spannungsquelle verbunden ist, angeordnet sein. Die Opferelektrode kann dabei beispielsweise auf der elektrischen Leitung aufgequetscht sein.

Gemäß einem weiteren vorteilhaften Gedanken wird vorgeschlagen, die Opferelektrode aus einem Werkstoff herzustellen, der gegenüber dem Werkstoff des Leiters und der Hülse in der Spannungsreihe der Metalle unedler ist. Vorzugsweise besteht die Elektrode aus Zink. Zink hat in der Spannungsreihe ein Normalpotential von -0,76 V. Eine Elektrode aus Nickel hat ein Normalpotential von -0,24 V. Beide Opferelektroden bilden den Negativpol des galvanischen Elementes.

Gemäß einem weiteren erfinderischen Gedanken wird vorgeschlagen, die Durchführung mit einer eine Elektrokorrosion der Durchführung vermeidenden Schutzeinrichtung zu versehen, durch die eine Wegstrecke für einen elektrischen Strom eines sich bildenden galvanischen Elementes sich verlängert. Dadurch, daß der elektrische Widerstand unter anderem auch davon abhängt, wie lang die elektrische Führung ist, wird durch die Verlängerung des Stromweges ein Widerstand erzielt, durch den ein Stromfluß und die daraus resultierende Elektrokorrosion verringert. Die Verlängerung der Wegstrecke für einen elektrischen Strom ist insbesondere im Zusammenhang mit elektrischbeheizbaren katalytischen Konvertern von Interesse, die bei höheren Spannungen betrieben werden. Beispielsweise kann ein solcher elektrisch beheizbarer katalytischer Konverter mit einer Spannung ca. 30 Volt betrieben werden. Zur konkreteren Ausgestaltung der Schutzeinrichtung wird vorgeschlagen, daß die Schutzeinrichtung durch eine wenigstens die aus dem Mantel ragende Stirnfläche der Hülse abdeckende elektrisch nicht leitende wenigstens eine Lage aufweisende Schutzschicht gebildet wird. Vorzugsweise besteht die Schutzschicht oder die äußere Lage der Schutzschicht aus einem hydrophoben Werkstoff. Hierdurch wird vermieden, daß auf der Schutzschicht Elektrolytansammlungen in Form von Wasser sich bilden, die erst das Entstehen einer Elektrokorrosion bedingen.

Gemäß eines weiteren vorteilhaften Gedankens wird vorgeschlagen, die Schutzschicht aus wenigstens einer Lage eines Kunststoffes auszubilden, vorzugsweise aus Silikon. Alternativ zu Silikon kann die Schutzschicht aus Glas bestehen. Die Schutzschicht sollte generell aus einem Werkstoff bestehen, der porenfrei ist.

Gemäß einem weiteren erfinderischen Gedanken wird eine Durchführung vorgeschlagen, bei der eine Elektrokorrosion dadurch vermieden wird, daß die Schutzeinrichtung durch eine elektrische Verbindung des Mantels mit Massepotential gebildet wird. Hierdurch wird ein Potentialaufbau im Bereich des elektrischen Minuspols der elektrischen Durchführung verhindert, wodurch der Effekt der Elektrokorrosion wirksam verhindert wird.

Weitere Vorteile und Einzelheiten der erfindungsgemäßen elektrisch isolierenden Durchführung werden anhand der in der Zeichnung bevorzugten Ausführungsbeispiele erläutert. Es zeigen:
- Fig. 1: im Schnitt ein erstes Ausführungsbeispiel einer Durchführung mit einer Opferelektrode,
- Fig. 2: im Schnitt ein zweites Ausführungsbeispiel einer Durchführung mit einer Opferelektrode,
- Fig. 3: im Schnitt ein drittes Ausführungsbeispiel einer elektrischen Durchführung mit einer Schutzschicht,
- Fig. 4: im Schnitt ein Beispiel einer Durchführung gemäß dem Stand der Technik mit Anschluß des Gehäuses an Masse potential,
- Fig. 5: im Schnitt ein fünftes Ausführungsbeispiel einer Durchführung mit einem Gehäuse und
- Fig. 6: im Schnitt ein sechstes Ausführungsbeispiel einer Durchführung mit einem Gehäuse.

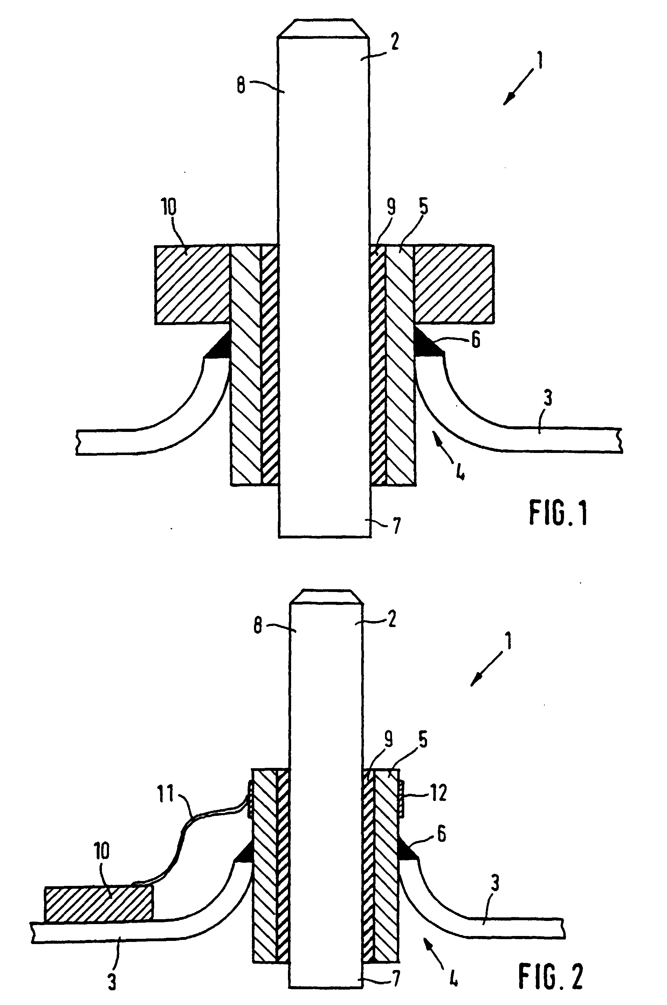

In der Fig. 1 ist ein erstes Ausführungsbeispiel einer elektrisch isolierenden Durchführung 1 eines elektrischen Leiters 2 durch einen metallischen Mantel 3 eines Abgassystems einer Verbrennungskraftmaschine, insbesondere eines elektrisch beheizbaren katalytischen Konverters dargestellt. Der Aufbau eines solchen katalytischen Konverters ist beispielsweise in der WO 92/02714 beschrieben.

In dem Mantel 3 ist eine Durchgangsöffnung 4 ausgebildet, durch welche sich eine Hülse 5 hindurcherstreckt. Die metallische Hülse 5 ist mit dem Mantel 3 verschweißt. Mit 6 ist die Schweißnaht zwischen der Hülse 5 und dem Mantel 3 bezeichnet. Durch die Hülse 5 erstreckt sich der Leiter 2. Das in den Mantel 3 hineinragende Ende 7 des Leiters 2 steht in elektrischem Kontakt mit einem nicht dargestellten katalytischen Konverter. Das aus der Hülse 5 vom Mantel 3 wegragende Ende 8 des Leiters 2 dient zu elektrischen Ankopplung an einen elektrischen Leiter, welcher nicht dargestellt ist, der mit einer Spannungsquelle verbunden ist.

Zwischen dem Leiter 2 und der Hülse 5 ist eine elektrische Isolierung 9 angebracht, so daß eine elektrische Entkopplung zwischen der Hülse 5 und dem Leiter 2 gewährleistet ist. Bei der Isolierung 9 kann es sich beispielsweise um Aluminiumoxid handeln.

Wie aus der Fig. 1 ersichtlich ist, ragt die Hülse 5 aus dem Mantel 3 nach außen heraus. An diesem vorstehenden Endbereich der Hülse 5 ist eine Opferelektrode 10 angebracht. Die Opferelektrode 10 ist kraftschlüssig mit der Hülse 5 verbunden. Die Opferelektrode 10 ist ringförmig ausgebildet.

Die Innen- und Außenkonturen der Opferelektrode 10 kann an die baulichen Gegebenheiten z. B. der Hülse 5 angepaßt sein.

Die Opferelektrode 10 besteht vorzugsweise aus Zink. Sammelt sich ein Elektrolyt z. B. in der Form von Salzwasser oberhalb der Hülse 5 und es kommt zu einem Kontakt zwischen dem Leiter 2 und der Hülse 5, so fließt ein elektrischer Strom über die Opferelektrode 10, wodurch die Opferelektrode 10 korrodiert. Hierdurch wird vermieden, daß die Hülse 5 bzw. der Leiter 2 korrodiert.

In der Fig. 2 ist ein zweites Ausführungsbeispiel einer elektrischen Durchführung mit einer Opferelektrode dargestellt. Der prinzipielle Aufbau der Durchführung 1 nach Fig. 2 entspricht der Darstellung in der Fig. 1. Der elektrische Leiter 2 erstreckt sich durch eine Hülse 5. Zwischen der Hülse 5 und dem elektrischen Leiter 2 ist eine Isolierung 9 ausgebildet. Die Hülse 5 ist in einer Durchgangsöffnung 4 des Mantels 3 ausgebildet. Die Hülse ist mit dem Mantel 3 verschweißt.

Auf dem Mantel 3 eines Gehäuses eines katalytischen Konverters ist eine Opferelektrode 10 angeordnet. Die Opferelektrode 10 kann auf einem nicht weiter dargestellten Bolzen, der mit dem Mantel 3 verbunden ist aufgesetzt sein. Die Opferelektrode 10 ist über eine elektrische Leitung 11, welche vorzugsweise aus Kupfer besteht, mit der Hülse 5 verbunden. In dem in der Fig. 2 dargestellten Ausführungsbeispiel ist auf der Hülse 5 eine Manschette 12, die aus einem elektrisch gut leitendem Werkstoff besteht, angeordnet. Die Manschette 12 ist mit der elektrischen Leitung 11 verbunden. Die in der Fig. 2 dargestellte Ausführungsform hat den Vorteil, daß ein Austausch der Opferelektrode 10 relativ einfach erfolgen kann. Ferner kann eine Sichtprüfung der Elektrode 10 ohne großen Aufwand erfolgen.

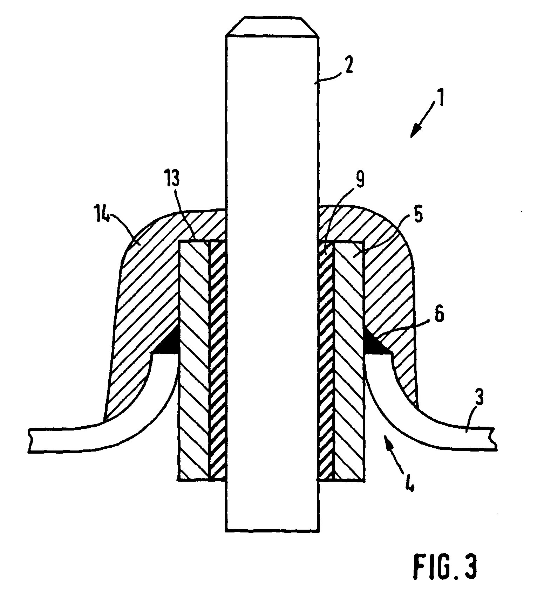

In der Fig. 3 ist ein drittes Ausführungsbeispiel einer erfindungsgemäßen elektrisch isolierenden Durchführung eines elektrischen Leiters 2 durch einen metallischen Mantel 3 eines Abgassystems einer Verbrennungskraftmaschine dargestellt. Der Mantel 3 weist im Bereich der Durchführung 1 eine Durchgangsöffnung 4 durch die sich eine Hülse 5 hindurcherstreckt, auf. Die Hülse 5 ist mit dem Mantel 3 mittels einer Schweißnaht 6 verschweißt.

Zwischen der Hülse 5 und dem elektrischen Leiter 2 ist eine elektrische Isolierung 9 ausgebildet, die den Leiter 2 von der Hülse 5 und somit dem Mantel 3 elektrisch entkoppelt.

Die Durchführung 1 weist eine Schutzeinrichtung in Form einer die Stirnfläche 13 und den Außenmantel der Hülse 5 abdeckenden elektrisch nicht leitenden Schutzschicht 14. Die Schutzschicht 14 erstreckt sich bis zum Mantel 3, wodurch die Hülse 5 in Verbindung mit der Isolierung 9 von dem elektrischen Leiter 2 von außen her entkoppelt ist. In dem dargestellten Ausführungsbeispiel ist die Schutzschicht 14 einlagig ausgebildet. Es ist auch möglich, die Schutzschicht 14, wenn dies zweckmäßig erscheint, mehrlagig auszubilden. Eine mehrlagige Schutzschicht kann dann von Interesse sein, wenn ein unterschiedliches thermisches Ausdehnungsverhalten der Hülse 5, des Mantels 3 vorhanden ist, so daß in der Schutzschicht 14 keine thermisch bedingten Spannungsrisse entstehen. Die Schutzschicht ist vorzugsweise porenfrei, so daß eine Ansammlung von Wasser auf der Schutzschicht 14 vermieden wird.

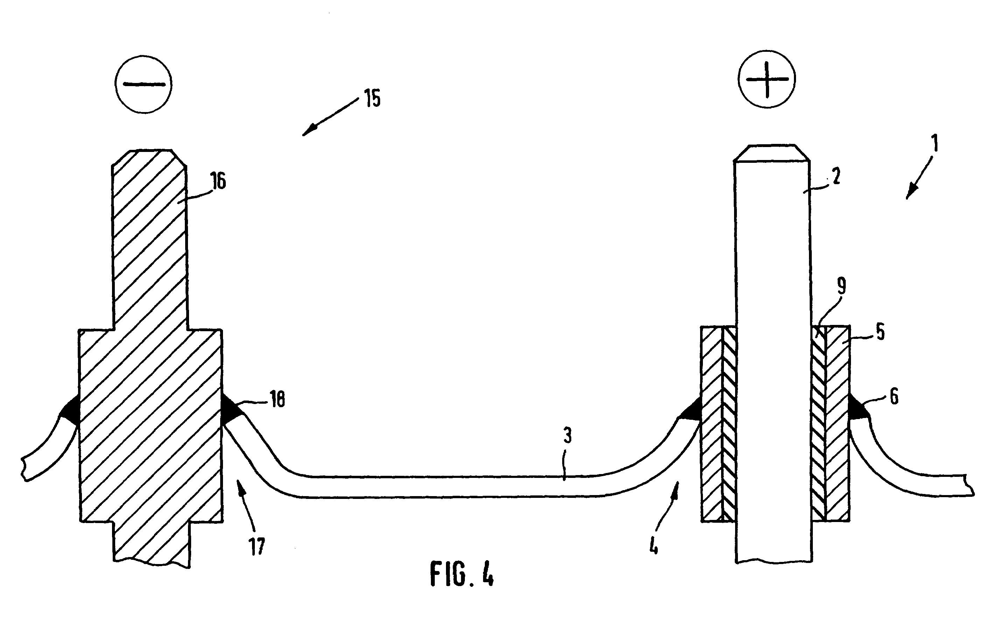

In der Fig. 4 ist zum Vergleich eine an sich bekannte Durchführung durch ein an Masse potential liegendes Gehäuse dargestellt. In der Durchführung 1 wird ein elektrischer Leiter 2 durch einen metallischen Mantel 3 eines katalytischen Konverters hindurchgeführt. Der Mantel 3 weist eine Durchgangsöffnung 4 durch die sich eine Hülse 5 erstreckt auf. Die Hülse 5 besteht aus einem metallischen Werkstoff. Der Mantel 3 ist mit der Hülse 5 verschweißt. Innerhalb der Hülse 5 ist eine elektrische Isolierung 9 vorgesehen, welche den Leiter 2 umgibt.

Zur Vermeidung einer Elektrokorrosion an der Durchführung ist eine Schutzeinrichtung 15 vorgesehen, die den Mantel 3 und somit die Hülse 5 durch eine elektrische Verbindung den Mantel 3 und somit die Hülse auf Massepotential setzt. Die Schutzeinrichtung 15 weist einen Anschluß 16 auf, der sich durch eine Öffnung 17 im Mantel 3 hindurcherstreckt. Der Anschluß 16 ist mit dem Mantel 3 an der Position 18 verschweißt. Der Anschluß 16 und der Leiter 2 bestehen aus gleichem metallischen Werkstoff.

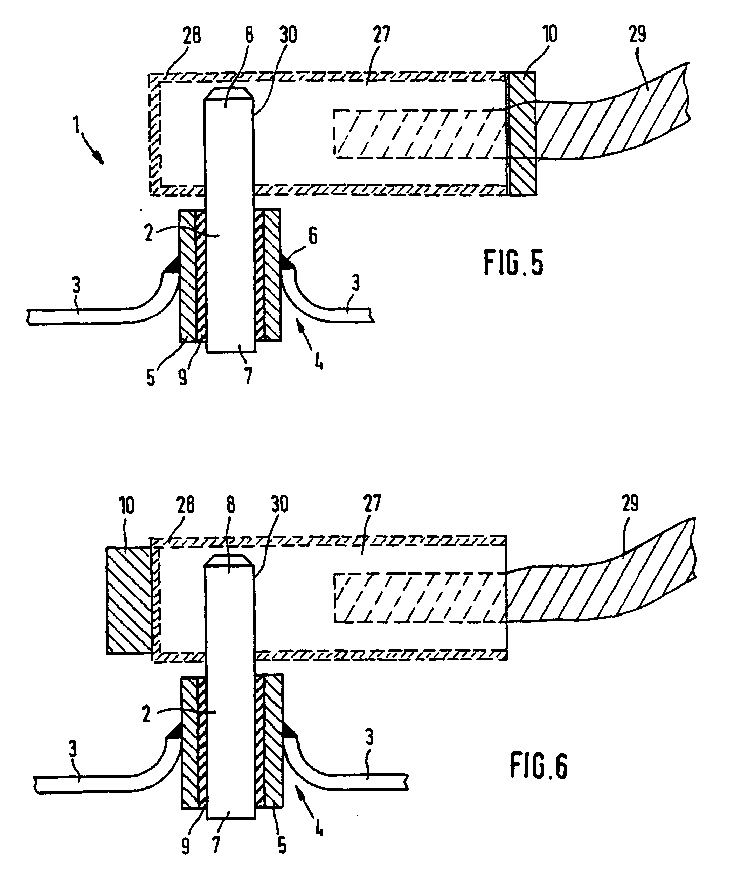

In der Fig. 5 ist ein fünftes Ausführungsbeispiel einer elektrisch isolierenden Durchführung 1 eines elektrischen Leiters 2 durch einen metallischen Mantel 3 eines Abgassystems einer Verbrennungskraftmaschine, insbesondere eines elektrisch beheizbaren katalytischen Konverters dargestellt. In dem Mantel 3 ist eine Durchgangsöffnung 4 ausgebildet, durch die sich eine Hülse 5 hindurch erstreckt. Die metallische Hülse 5 ist mit dem Mantel 3 entlang der Schweißnaht 6 verschweißt. Durch die Hülse 5 erstreckt sich der Leiter 2, wobei das in den Mantel 3 hineinragende Ende des Leiters 2 im elektrischen Kontakt mit einem nicht dargestellten katalytischen Konverters steht. Das aus der Hülse 5 vom Mantel 3 wegragende Ende 8 des Leiters 2 dient zur elektrischen Ankopplung an eine elektrische Leitung 29, die mit einer nicht dargestellten Spannungsquelle verbunden ist. Die Ankopplung des Leiters 2 an die elektrische Leitung 29 erfolgt mittels eines Kontaktkörpers 27. In dem dargestellten Ausführungsbeispiel ragt die elektrische Leitung 29 in den Kontaktkörper 27 hinein.

Zur mechanischen und elektrischen Ankopplung des Kontaktkörpers 27 an den Leiter 2 weist der Kontaktkörper 27 einen Sacklochbohrung 30 auf. Die Bohrung 30 und der Leiter 2 weisen jeweils einen kreisförmigen Querschnitt auf. Die Verbindung zwischen dem Kontaktkörper 27 und dem elektrischen Leiter 2 erfolgt mittels eines Press-Sitzes, wofür die Bohrung 30 entsprechend einen geringeren Durchmesser aufweist als der Leiter 2.

Auf dem Kontaktkörper 27 ist eine anodische Schutzschicht 28 vorgesehen. Die Schutzschicht besteht vorzugsweise aus Zink. An dem Kontaktkörper 27 ist die Opferelektrode 10 angeordnet. Die in der Fig. 7 dargestellte Positionierung der Opferelektrode 10 auf dem Kontaktkörper 27 ist beispielhaft und kann entsprechend variiert werden, wobei stets sichergestellt werden soll, daß die Opferelektrode auch als solche funktionsfähig bleibt.

In der Fig. 6 ist eine weitere Ausführungsform dargestellt. In dieser Ausführungsform ist die Opfereleketrode 10 unmittelbar an der elektrischen Leitung 29 angeordnet, die mit dem Kontaktkörper 27 verbunden ist. Die Verbindung der Opferelektrode 10 mit der elektrischen Leitung 29 kann dadurch erfolgen, daß die Opferelektrode 10 auf der elektrischen Leitung 29 aufgequescht ist. Natürlich kann bei Bedarf auch die Opferanode direkt auf dem Leiter oder dessen Ende 8 angebracht sein, soweit diese nicht vollständig von dem Kontaktkörper 27 abgedeckt sind.

### Bezugszeichenliste

- 1: Durchführung
- 2: Leiter
- 3: Mantel
- 4: Durchgangsöffnung
- 5: Hülse
- 6: Schweißnaht
- 7, 8: Ende
- 9: Isolierung
- 10: Opferelektrode
- 11: Leitung
- 12: Manschette
- 13: Stirnfläche
- 14: Schutzschicht
- 15: Schutzeinrichtung
- 16: Anschluß
- 17: Öffnung
- 18: Schweißnaht
- 27: Kontaktkörper
- 28: Schutzschicht
- 29: elektrische Leitung
- 30: Sacklochzahnung

## Patentansprüche

1. Elektrisch isolierende Durchführung (1) wenigstens eines elektrischen Leiters (2) durch einen metallischen Mantel (3) eines Abgassystems einer Verbrennungskraftmaschine, insbesondere eines elektrisch beheizbaren katalytischen Konverters, wobei der Mantel (3) im Bereich der Durchführung (1) eine Hülse (5) aus einem metallischen Werkstoff aufweist, die mit dem Mantel (3) verbunden ist und durch die sich der Leiter (2) erstreckt,
dadurch gekennzeichnet, daß die Durchführung (1) eine eine Elektrokorrosion der Durchführung (1) vermeidende Schutzeinrichtung (15) aufweist, die wenigstens eine Opferelektrode (10) umfaßt, die mit der Hülse (5) elektrisch verbunden ist.

2. Durchführung nach Anspruch 1, dadurch gekennzeichnet, daß die Opferelektrode (10) auf der Hülse (5) angeordnet ist.

3. Durchführung nach Anspruch 2, dadurch gekennzeichnet, daß die Opferelektrode (10) ringförmig ausgebildet ist.

4. Durchführung nach Anspruch 3, dadurch gekennzeichnet, daß die Opferelektrode (10) kraft- und/oder formschlüssig mit der Hülse (5) verbunden ist.

5. Durchführung nach Anspruch 1, dadurch gekennzeichnet, daß die Opferelektrode (10) auf dem Mantel (3) angeordnet und elektrisch mit der Hülse (5) verbunden ist.

6. Durchführung nach Anspruch 5, dadurch gekennzeichnet, daß die Opferelektrode (10) lösbar mit dem Mantel (3) verbunden ist.

7. Durchführung nach Anspruch 5, dadurch gekennzeichnet, daß, die Opferelektrode (10) auf einem mit dem Mantel (3) fest verbundenem Bolzen angeordnet ist.

8. Durchführung nach Anspruch 5, 6 oder 7, dadurch gekennzeichnet, daß die elektrische Verbindung zwischen der Opferelektrode (10) und dem Mantel (3) eine Leitung aus einem elektrisch gut leitendem Werkstoff, insbesondere aus Kupfer, bildet.

9. Durchführung nach Anspruch einem der Ansprüche 1 bis 8, dadurch gekennzeichnet, daß die Opferelektrode (10) aus einem Werkstoff besteht, der gegenüber dem Werkstoff des Leiters (2) in der Spannungsreihe unedler ist.

10. Durchführung nach Anspruch 9, dadurch gekennzeichnet, daß die Opferelektrode (10) aus Zink besteht.

11. Elektrisch isolierende Durchführung (1) wenigstens eines elektrischen Leiters (2) durch einen metallischen Mantel (3) eines Abgassystems einer Verbrennungskraftmaschine, insbesondere eines elektrisch beheizbaren katalytischen Konverters, wobei der Mantel (3) im Bereich der Durchführung (1) eine Hülse (5) aus einem metallischen Werkstoff aufweist, die mit dem Mantel (3) verbunden ist und durch die sich der Leiter (2) erstreckt,
dadurch gekennzeichnet,
daß die Durchführung (1) eine eine Elektrokorrosion der Durchführung (1) vermeidende Schutzeinrichtung (15) aufweist, durch die eine Wegstrecke für einen elektrischen Strom eines sich bildenden galvanischen Elementes verlängert wird.

12. Durchführung nach Anspruch 1 oder 11, dadurch gekennzeichnet, daß die Schutzeinrichtung (15) durch eine wenigstens die aus dem Mantel ragende Stirnfläche (13) der Hülse (5) abdeckende elektrisch nichtleitende wenigstens eine Lage aufweisende Schutzschicht (14) gebildet ist.

13. Durchführung nach Anspruch 12, dadurch gekennzeichnet, daß die Schutzschicht (14) oder die äußere Lage der Schutzschicht porenfrei ist.

14. Durchführung nach Anspruch 12 oder 13, dadurch gekennzeichnet, daß die Schutzschicht (14) oder die äußere Lage der Schutzschicht (14) aus einem hydrophoben Werkstoff besteht.

15. Durchführung nach Anspruch 12, 13 oder 14, dadurch gekennzeichnet, daß die Schutzschicht (14) wenigstens eine Lage aus einem Kunststoff, vorzugsweise aus Silikon, aufweist.

16. Durchführung nach eine der Ansprüche 12 bis 14, dadurch gekennzeichnet, daß die Schutzschicht (14) wenigstens eine Lage aus Glas aufweist.

17. Durchführung nach einem der Ansprüche 12 bis 16, dadurch gekennzeichnet, daß die Schutzschicht (14) die Außenfläche der Hülse (5) vollständig umgibt.

18. Durchführung nach Anspruch 17, dadurch gekennzeichnet, daß die Schutzschicht (14) wenigstens teilweise auf dem Mantel (3) ausgebildet ist.

19. Durchführung nach einem der Ansprüche 11 bis 18, dadurch gekennzeichnet, daß der Mantel eine elektrische Verbindung mit Massepotential hat.

## Claims

1. An electrically insulating lead-through assembly (1) for at least one electric conductor (2) through a metal casing (3) of an exhaust gas system of an internal combustion engine, in particular an electrically heatable catalytic converter, wherein in the region of the lead-through assembly (1) the casing (3) has a sleeve (5) which comprises a metal material and which is connected to the casing (3) and through which the conductor (2) extends. characterised in that the lead-through assembly (1) has a protection means (15) which avoids electrocorrosion of the lead-through assembly (1) and which includes at least one sacrificial electrode (10) which is electrically connected to the sleeve (5)

2. A lead-through assembly according to claim 1 characterised in that the sacrificial electrode (10) is arranged on the sleeve (5).

3. A lead-through assembly according to claim 2 characterised in that the sacrificial electrode (10) is of an annular configuration.

4. A lead-through assembly according to claim 3 characterised in that the sacrificial electrode (10) is force-lockingly and/or positively lockingly connected to the sleeve (5).

5. A lead-through assembly according to claim 1 characterised in that the sacrificial electrode (10) is arranged on the casing (3) and is electrically connected to the sleeve (5).

6. A lead-through assembly according to claim 5 characterised in that the sacrificial electrode (10) is releasably connected to the casing (3).

7. A lead-through assembly according to claim 5 characterised in that the sacrificial electrode (10) is arranged on a bolt or pin fixedly connected to the casing (3).

8. A lead-through assembly according to claim 5, claim 6 or claim 7 characterised in that the electrical connection between the sacrificial electrode (10) and the casing (3) is formed by a lead of a material which is a good electrical conductor, in particular copper.

9. A lead-through assembly according to one of claims 1 through 8 characterised in that the sacrificial electrode (10) comprises a material which is baser in the electromotive series than the material of the conductor (2).

10. A lead-through assembly according to claim 9 characterised in that the sacrificial electrode (10) comprises zinc.

11. An electrically insulating lead-through assembly (1) for at least one electric conductor (2) through a metal casing (3) of an exhaust gas system of an internal combustion engine, in particular an electrically heatable catalytic converter, wherein in the region of the lead-through assembly (1) the casing (3) has a sleeve (5) which comprises a metal material and which is connected to the casing (3) and through which the conductor (2) extends, characterised in that the lead-through assembly (1) has a protection means (15) which avoids electrocorrosion of the lead-through assembly (1) and by which a path for an electric current of a galvanic element which is formed is increased in length.

12. A lead-through assembly according to claim 1 or claim 11 characterised in that the protection means (15) is formed by an electrically non-conducting protection layer (14) which has at least one layer portion and which covers at least the end surface (13) of the sleeve (5), which projects out of the casing.

13. A lead-through assembly according to claim 12 characterised in that the protection layer (14) or the outer layer portion thereof is pore-free.

14. A lead-through assembly according to claim 12 or claim 13 characterised in that the protection layer (14) or the outer layer portion of the protection layer (14) comprises a hydrophobic material.

15. A lead-through assembly according to claim 12, claim 13 or claim 14 characterised in that the protection layer (14) has at least one layer portion of a plastics material, preferably silicone.

16. A lead-through assembly according to one of claims 12 through 14 characterised in that the protection layer (14) has at least one layer portion of glass.

17. A lead-through assembly according to one of claims 12 through 16 characterised in that the protection layer (14) completely encloses the outside surface of the sleeve (5).

18. A lead-through assembly according to claim 17 characterised in that the protection layer (14) is at least partially formed on the casing (3).

19. A lead-through assembly according to one of the claims 11 through 18 characterised in that the casing (3) has an electrical connection to ground potential.

## Revendications

1. Traversée électriquement isolante (1) pour au moins un conducteur électrique (2) traversant l'enveloppe métallique (3) d'un système de gaz d'échappement d'un moteur à combustion, notamment d'un convertisseur catalytique pouvant être chauffé électriquement, l'enveloppe (3) comportant dans la zone de la traversée (1) un manchon (5) métallique qui est fixé à l'enveloppe (3) et à travers lequel le conducteur (2) s'étend,
caractérisée en ce que la traversée (1) comporte un dispositif de protection (15) qui évite une électrocorrosion de la traversée (1) et qui comprend au moins une électrode sacrifiée (10) qui est reliée électriquement au manchon (5).

2. Traversée selon la revendication 1,
caractérisée en ce que l'électrode sacrifiée (10) est agencée sur le manchon (5).

3. Traversée selon la revendication 2,
caractérisée en ce que l'électrode sacrifiée (10) est construite en forme d'anneau.

4. Traversée selon la revendication 3,
caractérisée en ce que l'électrode sacrifiée (10) est fixée par adhérence et/ou par sa forme au manchon (5).

5. Traversée selon la revendication 1,
caractérisée en ce que l'électrode sacrifiée (10) est agencée sur l'enveloppe (3) et est reliée électriquement au manchon (5).

6. Traversée selon la revendication 5,
caractérisée en ce que l'électrode sacrifiée (10) est fixée à l'enveloppe (3) en restant amovible.

7. Traversée selon la revendication 5,
caractérisée en ce que l'électrode sacrifiée (10) est agencée sur un axe fixé en permanence à l'enveloppe (3).

8. Traversée selon la revendication 5, 6 ou 7,
caractérisée en ce que la liaison électrique entre l'électrode sacrifiée (10) et l'enveloppe (3) est formée par un conducteur en un matériau conduisant bien l'électricité, notamment en cuivre.

9. Traversée selon l'une des revendications 1 à 8,
caractérisée en ce que l'électrode sacrifiée (10) est en un matériau qui est plus commun que le matériau du conducteur (2) dans le classement en tension des matériaux.

10. Traversée selon la revendication 9,
caractérisée en ce que l'électrode sacrifiée (10) est en zinc.

11. Traversée électriquement isolante (1) pour au moins un conducteur électrique (2) traversant l'enveloppe métallique (3) d'un système de gaz d'échappement d'un moteur à combustion, notamment d'un convertisseur catalytique pouvant être chauffé électriquement, l'enveloppe (3) comportant dans la zone de la traversée (1) un manchon (5) métallique qui est fixé à l'enveloppe (3) et à travers lequel le conducteur (2) s'étend,
caractérisée en ce que
la traversée (1) comporte un dispositif de protection (15) qui évite une électrocorrosion de la traversée (1) et par lequel un trajet pour un courant électrique d'un élément galvanique se formant est prolongé.

12. Traversée selon la revendication 1 ou 11,
caractérisée en ce que le dispositif de protection (15) est formé par un enduit de protection (14) qui recouvre au moins la surface frontale (13), dépassant de l'enveloppe, du manchon (5), qui n'est pas électriquement conducteur et qui comporte au moins une couche.

13. Traversée selon la revendication 12,
caractérisée en ce que l'enduit de protection (14) ou la couche extérieure de l'enduit de protection est sans porosité.

14. Traversée selon la revendication 12 ou 13,
caractérisée en ce que l'enduit de protection (14) ou la couche extérieure de l'enduit de protection (14) est en un matériau hydrophobe.

15. Traversée selon la revendication 12, 13 ou 14,
caractérisée en ce que l'enduit de protection (14) comporte au moins une couche en une matière synthétique, de préférence en silicone.

16. Traversée selon l'une des revendications 12 à
14, caractérisée en ce que l'enduit de protection (14) comporte au moins une couche en verre.

17. Traversée selon l'une des revendications 12 à
16, caractérisée en ce que l'enduit de protection (14) entoure complètement la surface extérieure du manchon (5).

18. Traversée selon la revendication 17,
caractérisée en ce que l'enduit de protection (14) est conçu au moins en partie sur l'enveloppe (3).

19. Traversée selon l'une des revendications 11 à 18, caracterisée en ce que l'enveloppe (3) a une liaison électrique au potentiel de masse.
